# FASCICULE DE BREVET EUROPEEN

(11) **EP 0 688 115 B1**
(45) Date de publication et mention de la délivrance du brevet: **20.03.2002**
(21) Numéro de dépôt: 95201543.6
(22) Date de dépôt: 12.06.1995
(51) Int. Cl.: H04L 1/22, H04B 1/74, H04L 12/56

(54) **Système de transmission comportant au moins deux liaisons pour relier un émetteur et un récepteur et récepteur convenant à un tel système**
Übertragungssystem mit mindestens zwei Übertragungskanälen zwischen einem Sender und einem Empfänger, sowie Empfänger für ein solches System
Transmission system using at least two transmission channels between a transmitter and a receiver and a receiver for use in such a system

(30) Priorité: 17.06.1994 FR 9407461
(43) Date de publication de la demande: 20.12.1995
(73) Titulaire: T.R.T. TELECOMMUNICATIONS RADIOELECTRIQUES ET TELEPHONIQUES, 75013 Paris (FR); LUCENT TECHNOLOGIES INC., Murray Hill, New Jersey 07974-0636 (US)
(72) Inventeur: Caia, Jean-Michel, F-75008 Paris (FR); Dahiot, Alain, F-75008 Paris (FR)
(74) Mandataire: Schmit, Christian Norbert Marie

(56) Documents cités:
- EP-A- 0 261 601
- EP-A- 0 265 080
- EP-A- 0 301 934
- EP-A- 0 380 368
- EP-A- 0 442 581
- EP-A- 0 519 563

## Description

La présente invention concerne un système de transmission comportant au moins deux voies de transmission pour relier un émetteur et un récepteur, système dans lequel il est prévu du côté émetteur :
des moyens pour émettre sur au moins deux voies des données à transmettre,
et du côté récepteur :
   - des circuits récepteurs pour recevoir les données issues des voies,
   - un circuit de remise en coïncidence des données desdites voies, formé :
      - d'un circuit détecteur de décalage entre les données des voies pour fournir une information de décalage,
      - d'un circuit de décalage pour décaler selon ladite information de décalage les données d'au moins une desdites voies,
   - un circuit de commutation pour connecter un circuit utilisateur sur une desdites voies,

L'invention concerne aussi un récepteur convenant à un tel système.

De tels systèmes trouvent d'importantes applications dans le domaine de transmission des données numériques par faisceaux hertziens ou autres. Dans ce genre de système, il est prévu des moyens pour remédier aux défaillances d'une voie de transmission. Ces moyens sont constitués par la présence d'une voie de secours. Le problème qui se pose alors est le passage sur cette voie de secours et le retour à la voie normale. Ces changements de voies doivent s'opérer sans que l'utilisateur s'aperçoive de quoi que ce soit, donc sans pertes de données. On parle alors de "hitless". Ceci ne peut s'effectuer que si les données provenant des deux voies coïncident élément binaire par élément binaire.

Un système de ce genre est décrit dans la demande de brevet européenne N° 0 137 563. Bien que donnant entière satisfaction, il s'est avéré que ce système d'une part, ne convenait pas, lorsque les données provenant de ces voies présentent un écart qui dépasse quelques éléments binaires et d'autre part, n'était pas apte à traiter des données à débit rapide.

La présente invention propose un système du genre décrit dans le préambule qui offre la possibilité de rattraper de grands écarts : typiquement une dizaine et peut fonctionner pour des débits de l'ordre de quelques centaines de méga-éléments binaires par seconde.

Pour cela, un tel système est remarquable en ce que le circuit de décalage est formé :
- d'un premier circuit série-parallèle pour fournir des mots de N éléments binaires à partir des données reçues,
- d'un circuit de permutation pour fournir des mots permutés en permutant les éléments binaires des mots à N éléments binaires en fonction de ladite information de décalage,
- d'une pluralité de deuxièmes circuits série-parallèles pour paralléliser sur M sorties chacune des N sorties du circuit de permutation, en prélevant dans des mémoires tampons les données en fonction de l'information de décalage.

La description suivante, faite en regard des dessins ci-annexés, le tout donné à titre d'exemple non limitatif, fera bien comprendre comment l'invention peut être réalisée.

La figure 1 montre un système de transmission conforme à l'invention.

La figure 2 montre le schéma d'un circuit de mise en coïncidence faisant partie du système de l'invention.

La figure 3 montre le détail de réalisation du circuit de permutation faisant partie du système de l'invention.

La figure 4 est un diagramme temps pour l'explication du fonctionnement d'un circuit série-parallèle faisant partie du système de l'invention.

La figure 5 montre la structure d'un circuit de comparaison faisant partie du système de l'invention.

La figure 6 montre le schéma d'un circuit automate faisant partie du système de l'invention.

Les figures 7 à 9 sont des ordinogrammes montrant le fonctionnement du circuit automate de la figure 6.

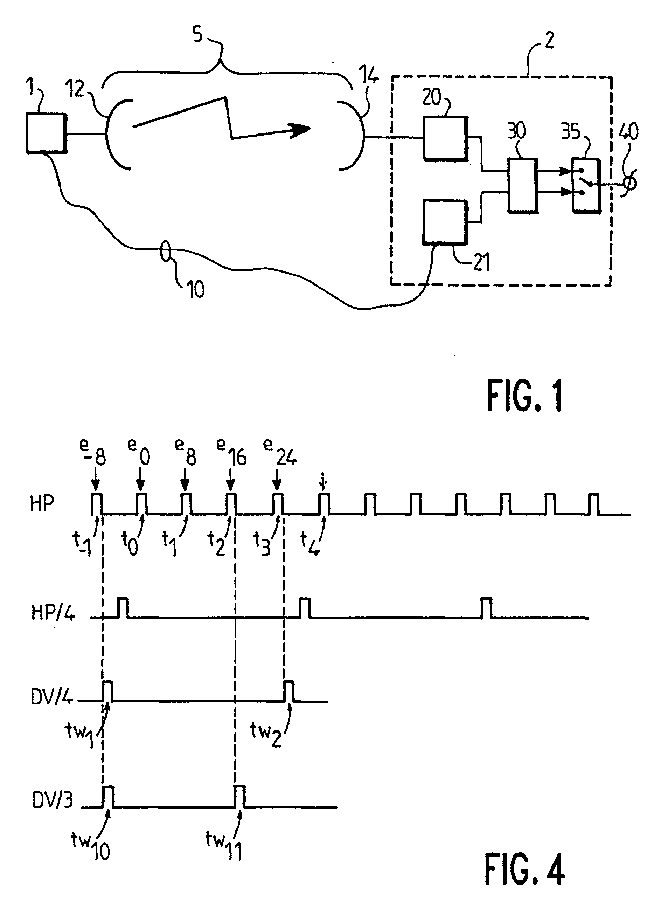

Le système montré à la figure 1 est formé d'un ensemble émetteur 1 et d'un ensemble récepteur 2. Ces deux ensembles sont reliés par deux voies de transmission 5 et 10. Par exemple, la voie de transmission 5 est une voie radioélectrique reliant une antenne d'émission 12 rattachée à l'ensemble d'émission 1 avec une antenne de réception 14 rattachée à l'ensemble de réception 2, tandis que la voie 10 est une liaison filaire reliant ces deux ensembles 1 et 2. Ces deux voies peuvent transmettre la même information de telle sorte que l'une peut secourir l'autre. Pour recevoir les informations provenant de ces deux voies, l'ensemble récepteur 2 comporte deux circuits de réception 20 et 21 affectés respectivement aux voies 5 et 10. Comme les voies 5 et 10 ont forcément des temps de propagation différents, il convient de prévoir un circuit de mise en coïncidence des informations 30 pour qu'au moyen d'un commutateur 35, on puisse se commuter sur l'une desdites voies sans qu'un utilisateur connecté à une borne de sortie 40 ne se rende compte de ce changement de voies.

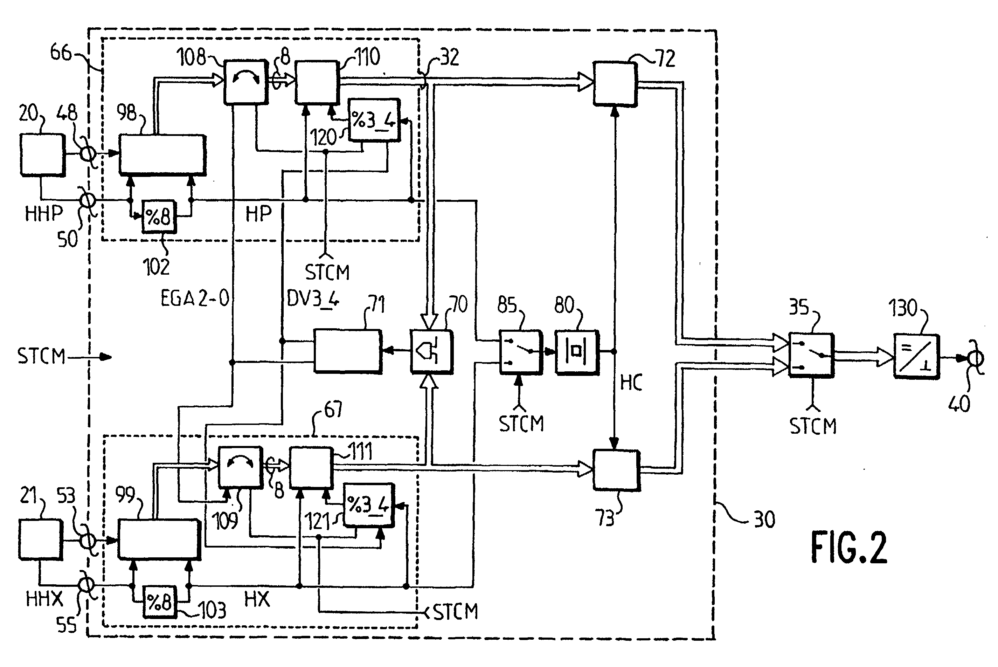

Le circuit de mise en coïncidence 30 montré à la figure 2 comporte deux accès 48 et 50 pour se connecter à la sortie du circuit récepteur 20 et deux accès 53 et 55 pour se connecter à la sortie du circuit récepteur 21. Les accès 48 et 53 sont affectés aux données se présentant sous forme série et les accès 50 et 55 aux signaux d'horloge HHP et HHX les accompagnant et donnant le rythme de ces données transmises en série. Les données sont appliquées respectivement à des circuits de décalage 66 et 67 qui, sous la conduite des signaux EGA2-0 et DV3_4 décalent les éléments binaires en vue d'assurer la mise en coïncidence précitée. Cette coïncidence est détectée par un circuit de comparaison 70 qui fournit à un circuit automate 71 son résultat pour que ce dernier puisse fournir les signaux EGA2-0 et DV3_4 . Des circuits tampons 72 et 73 permettent respectivement de fournir les données à la cadence d'un signal d'horloge HC provenant d'une horloge locale 80 asservie sur l'un des signaux d'horloge dérivés des accès 50 et 55. Ce choix est obtenu par un commutateur 85 dont les entrées reçoivent des signaux HP et HX dérivés des signaux HHP et HHX. La commande de ce commutateur est la même que celle du commutateur 35. Cette commande est assurée par un signal STCM qui définit donc la voie qui est utilisée à la borne 40.

Conformément à l'invention, les circuits de décalages 66 et 67 sont formés par des premiers circuits série-parallèle 98 et 99 pour que les données qui se présentent, sous forme série, à l'accès 48 et 53 soient mises sous forme parallèle. Des mots de huit éléments binaires sont ainsi fournis à la sortie de ces circuits 98 et 99. Ces mots sont accompagnés des signaux d'horloge associés HP et HX obtenus par des circuits diviseurs 102 et 103 qui divisent par huit la fréquence des signaux HHP et HHX. Ces mots sont ensuite appliqués à des circuits de permutation 108 et 109 qui permutent, selon une permutation circulaire, les éléments binaires constituant lesdits mots en fonction de l'information de décalage EGA2-0 élaborée par le circuit automate 71. Des pluralités de deuxièmes circuits série-parallèle représentées sous la forme de blocs 110 et 111 à la figure 2 mettent en parallèle chacune des huit sorties des circuits de permutation 108 et 109. Dans le cadre de cet exemple décrit, l'ordre de la mise en parallèle est quatre, de sorte que le nombre de sorties des blocs 110 et 111 est 32. Des diviseurs variables 120 et 121 permettent de décaler encore les informations selon une manière qui sera explicitée plus loin. Le taux de division, ici trois ou quatre, est défini par l'information de décalage DV3_4 élaborée par le circuit automate 71. On notera que le commutateur 35 commute les données se présentant sous la forme de trente-deux éléments binaires. Ceci permet de travailler à une fréquence notablement plus faible que la cadence des données série. Un circuit de conversion parallèle-série 130 peut être utilisé à la sortie du commutateur 35 si il est exigé des données série au niveau de la borne 40.

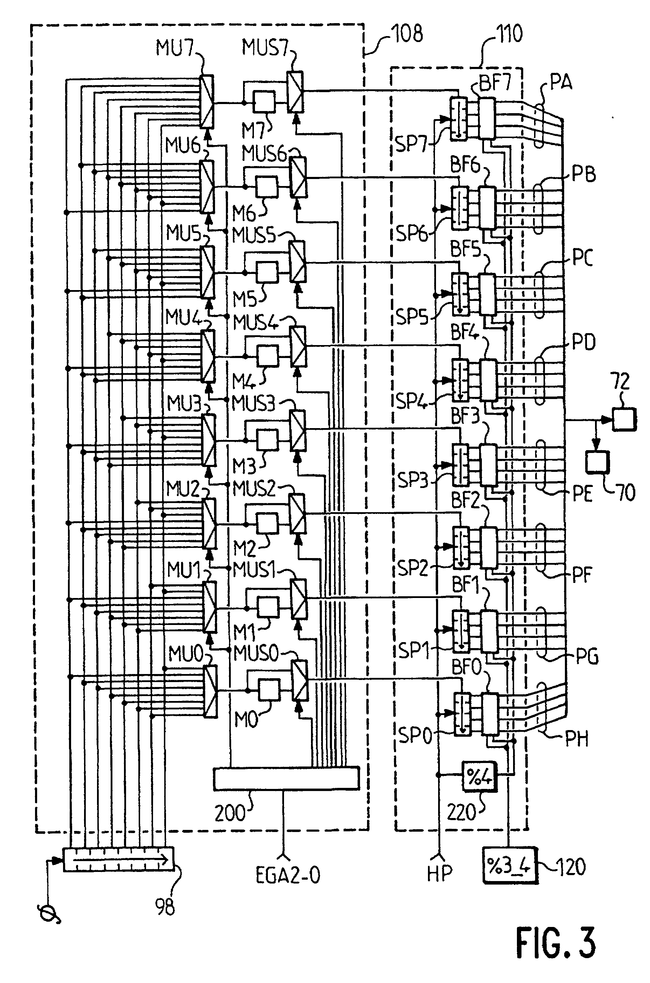

La constitution du circuit de permutation 108 est montrée en détail à la figure 3. La structure du circuit 109 peut être évidemment identique.

Il est formé d'un ensemble de multiplexeurs MU0, MU1,...MU7 dont les entrées sont branchées d'une manière qui découle de ce qui va être explicité au moyen du tableau I ci-dessous. La position de commutation de ces multiplexeurs est commandée par un seul signal établi par un circuit de commande 200 qui traite le signal EGA2-0. Dans ce qui suit, on va faire intervenir la suite des éléments binaires :
..., e₋₇, e₋₆, e₋₅, ..., e₀, e₁, e₂, e₃,....
qui sont considérés, au niveau du circuit 98, en des temps allant du passé au présent. Les éléments binaires à la sortie de ces multiplexeurs MU7 à MU0 sont donnés par le tableau I ci-dessous.

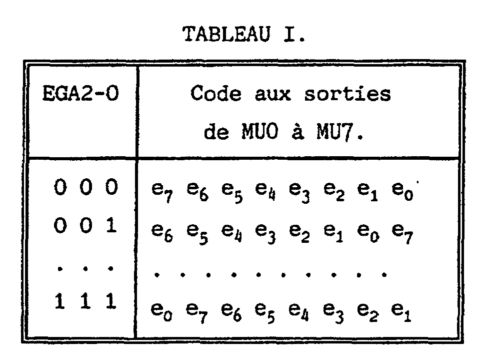

Le circuit 108 comporte aussi un élément de mémoire M0 à M7 pour emmagasiner l'élément binaire à la sortie des multiplexeurs MU0 à MU7. Des multiplexeurs MUS0 à MUS7 à deux positions, commandés aussi par le circuit de commande 200, permettent de fournir aux sorties du circuits 108, soit l'élément binaire emmagasiné, soit l'élément binaire à la sortie des multiplexeurs MU0 à MU7. Le tableau II ci-dessous explicite le mot finalement élaboré par le circuit de permutation 108. Dans ce tableau on fait intervenir les éléments binaires e₋₁, e₋₂,... qui sont successivement antérieurs à e₀.

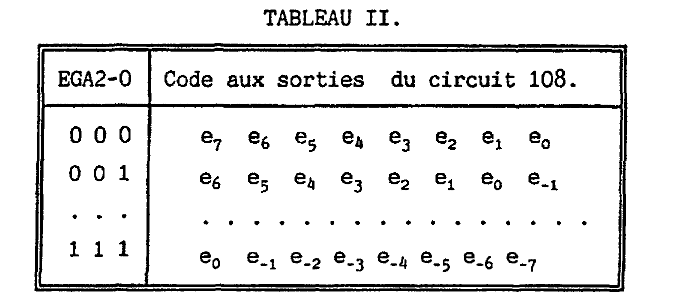

Le circuit 110 est élaboré à partir de registres à décalage SP0 à SP7 qui reçoivent respectivement les éléments binaires aux sorties des multiplexeurs MUS0 à MUS7. Ces éléments binaires sont décalés au rythme des signaux d'horloge HP. Les sorties en parallèle de ces registres sont reliées respectivement à des entrées de mémoires BF0 à BF7. Ces mémoires sont lues au rythme de signaux de sortie d'un diviseur 220 qui divise les signaux HP par quatre pour fournir un signal HP/4. Ces mémoires sont écrites au rythme du signal de sortie du diviseur variable 120. Les mémoires fournissent des mots de trente-deux éléments binaires sur des groupes de quatre sorties PA, PB, PC, PD, PE, PF, PG et PH. Les groupes de sorties des mémoires équivalentes du circuit 111 portent les références XA, XB, XC, XD, XE, XF, XG et XH.

Lorsque le taux de division est égal à quatre les éléments binaires se présentent de la manière indiquée dans le tableau III ci-dessous.

**TABLEAU III**

| SORTIE | | | | |
|---|---|---|---|---|
| BF0 | e₀ | e₈ | e₁₆ | e₂₄ |
| BF1 | e₁ | e₉ | e₁₇ | e₂₅ |
| ... | ..... | | | |
| BF₇ | e₇ | e₁₅ | e₂₃ | e₃₁ |

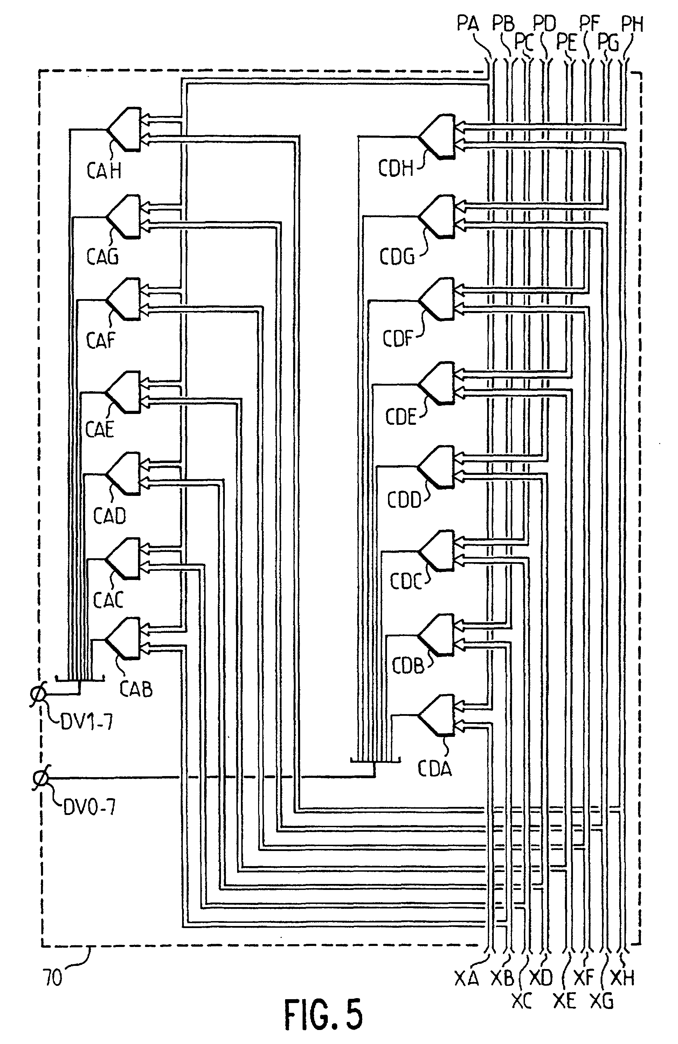

La figure 4 montre un diagramme temps destiné à expliquer le fonctionnement du circuit 110. Ce diagramme temps concerne plus particulièrement le registre SP0 et la mémoire BF0. Ainsi, au rythme du signal HP, les éléments binaires e₋₈, e₀, e₈, e₁₆, e₂₄, ... pénètrent dans le registre à décalage SP0 aux instants respectifs t₋₁, t₀, t₁, t₂, t₃, ... La ligne DV/4 donne l'allure des signaux d'écriture dans la mémoire BF0. On a fait figurer, sur ce diagramme temps, à cette ligne DV/4, deux instants d'écriture tw1 et tw2 lorsque le taux de division est quatre. Les éléments binaires e₀, e₈, e₁₆, e₂₄ sont alors emmagasinés dans la mémoire BF0 à l'instant tw2. A l'instant tw1, c'étaient les éléments binaires e₋₃₂, e₋₂₄, e₋₁₆ et e₋₈ qui l'étaient. On considère maintenant la ligne DV/3 correspondant au cas où le taux de division est trois. On distingue sur cette ligne les instants tw10 et tw11. L'instant tw10 correspond à l'instant tw1. C'est à partir de cet instant tw10 que le taux de division passe à trois. A l'instant tw11, seulement trois éléments binaires sont enregistrés dans le registre SP0, donc ce sont les éléments binaires e₋₈, e₀, e₈, e₁₆ qui sont finalement emmagasinés dans la mémoire BF0. Le tableau IV ci-dessous résume ce qui vient d'être dit pour un taux de division égal à trois. On remarque donc que l'on a obtenu un décalage d'un octet. Si on appelle M, le nombre de positions des registres à décalage SP0 à SP7, et N le nombre de positions du registre à décalage 98 (et respectivement 99), on peut montrer que la plage de remise en phase est égale à : N × (M-1) éléments binaires, soit dans notre exemple 24 :

**TABLEAU IV**

| SORTIE | | | | |
|---|---|---|---|---|
| BF0 | e₋₈ | e₀ | e₈ | e₁₆ |
| BF1 | e₋₇ | e₁ | e₉ | e₁₇ |
| ... | ..... | | | |
| BF7 | e₋₁ | e₇ | e₁₅ | e₃₃ |

Le circuit de comparaison 70 montré à la figure 5 est constitué d'une première série de comparateurs CDA, CDB, ..., CDH qui comparent deux à deux les mots de quatre éléments binaires aux sorties de PA, PB, ..., PH du circuit 110 et des sorties XA, XB, ..., XH correspondantes du circuit 111. Ainsi le comparateur CDA compare le mot à la sortie PA avec le mot à la sortie XA. On fournit de cette façon des signaux logiques sur les sorties DF0-7. Une deuxième série de comparateurs CAB, CAC, CAD, ..., CAH compare le mot de la sortie PA avec les mots aux sorties XB, XB, ..., XH. On fournit alors des signaux logiques sur les sorties DV1-7. Ces signaux sont utilisés par le circuit automate 71.

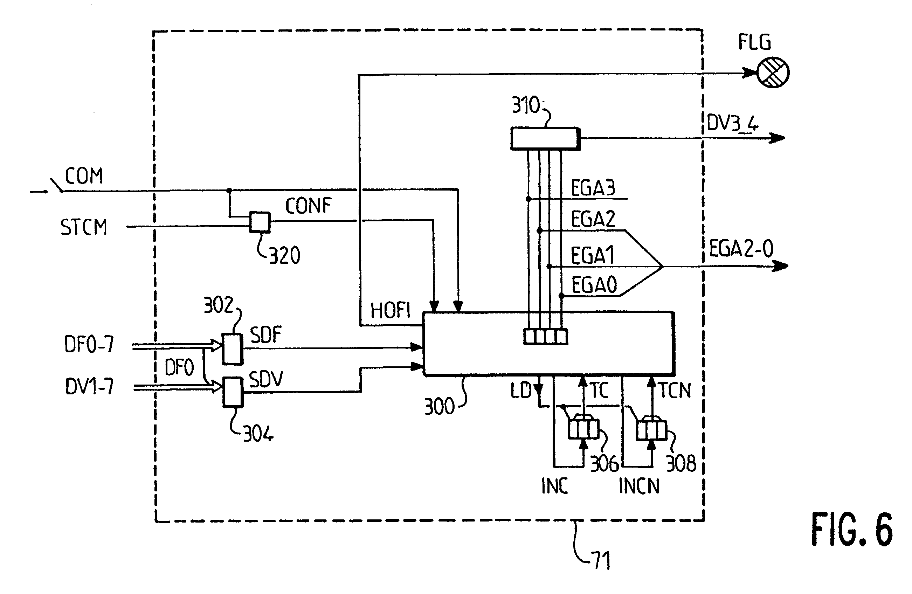

La figure 6 montre un schéma sur lequel ce circuit automate 71 est établi.

Il est constitué autour d'un circuit à états 300. Ce circuit définit une pluralité d'états donnés dans le tableau V ci-dessous.

**TABLEAU V.**

| ETATS | COMMENTAIRES |
|---|---|
| S0 | repos |
| S4 | temporisation |
| S5 | décalage d'un octet (110) |
| S7 | état de commutation |
| S8 | permutation d'1 eb (108) |
| S9 | permutation de 2 eb (108) |
| S10 | permutation de 3 eb (108) |
| S11 | permutation de 4 eb (108) |
| S12 | permutation de 5 eb (108) |
| S13 | permutation de 6 eb (108) |
| S14 | permutation de 7 eb (108) |
| S15 | permutation de 8 eb (108) |
| eb : élément binaire | |

Les changements d'états sont donnés dans les organigrammes donnés aux figures 6, 7 et 8. Le circuit automate 71 comporte deux circuits logiques 302 et 304. Le circuit 302 fournit un signal SDF qui est un "ET" logique de tous les signaux DF0-7. Ce signal SDF, lorsque sa valeur est "1", indique une coïncidence des éléments binaires de la voie 5 avec les éléments binaires de la voie 10.
Le circuit 304 fournit un signal SDV qui est un "ET" logique des signaux DV1-7 et du signal DF0. Le circuit comporte encore deux compteurs 306 et 308 qui fournissent respectivement des signaux logiques TC et TCN en fonction de signaux d'incrémentation INC et INCN respectivement. Ces compteurs sont initialisés par un signal LD. Le signal TC, lorsqu'il est égal à "1" signifie que le compteur 306 est plein. Ce compteur compte en fait le nombre de coïncidences signalées par le signal SDF(="1"). Le signal TCN, lorsqu'il est égal à "1", signifie que le compteur 308 est plein. Ce compteur compte en fait le nombre de non-coïncidences signalées par le signal SDF(="0"). Ainsi, ces compteurs permettent de ne pas prendre de décisions trop hâtives à l'apparition de signaux SDF qui ne reflètent pas toujours une situation réelle. Le signal SDV permet de détecter le cas où les voies ne transmettent pas de signaux utiles et donc de détecter des signaux de données de valeur nulle ou des silences de communication. Les signaux INC, INCN et LD dépendent donc des états du circuit 300. Un circuit 310 détectant un état du circuit 300 fournit le signal DV3_4.
Un circuit logique 320 fournit un signal CONF à partir du signal STCM et d'un signal COM, ce signal COM extérieur signifiant que l'on veut se commuter d'une manière arbitraire sur une certaine voie, la voie 5 ou la voie 10, la valeur CONF=1 signifiant qu'un changement de voie est demandé et la valeur CONF=0, qu'aucun changement de voie n'est nécessaire. Un signal HOFI allume un voyant FLG pour signifier qu'une commutation de voies a eu lieu sans qu'il y ait coïncidence entre elles.

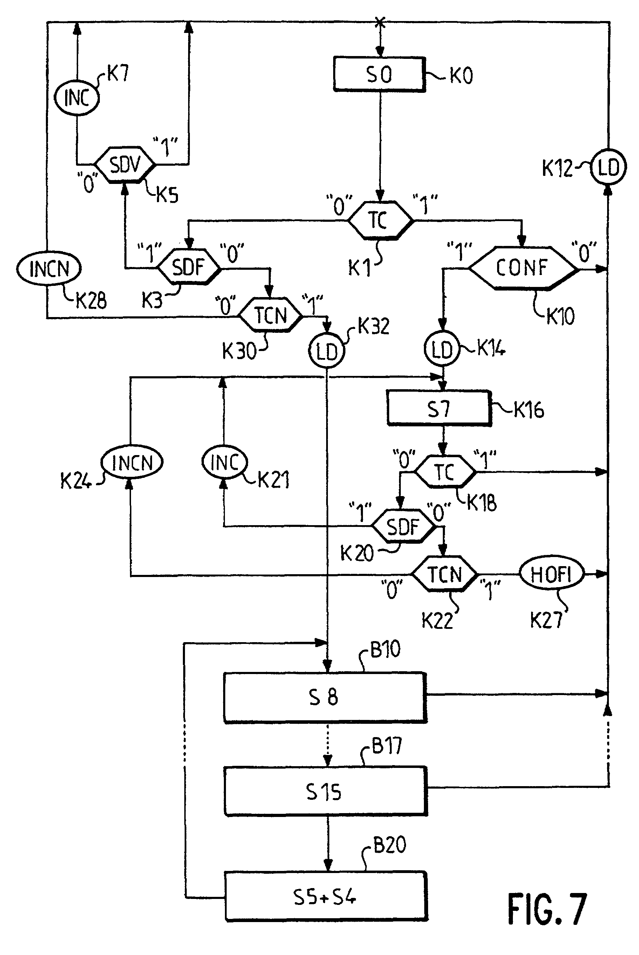

Il est possible maintenant d'expliquer les différents organigrammes. On considère, pour commencer, la case K0 de la figure 7. Cette case correspond à l'état de repos S0 du circuit 71. On examine à la case K1 la valeur du signal TC. Si elle est nulle, on passe à la case K3 et l'on examine la valeur du signal SDF. Si ce signal SDF est égal à "1", on passe à la case K5 où la valeur du signal SDV est testée. Si celle-ci est égale à "0", on active le signal INC (case K7) pour que le compteur 306 s'incrémente et on reste à l'état S0. Si la valeur du signal SDV est égale à "1", on reste à cet état S0 car on est en phase de silence et l'on n'incrémente pas le compteur 306.

Si le signal TC testé à la case K1 a la valeur "1", on passe à la case K10. Là, on examine la relation CONF=1 qui signifie qu'un changement de voie est à entreprendre : si on est sur la voie 5, on cherche à passer sur la voie 10 et si on est sur la voie 10, on cherche à passer sur la voie 5. Si on ne veut pas changer de voie, on réinitialise les compteurs 306 et 308 en activant le signal LD (case K12). Si on veut changer, on réinitialise lesdits compteurs (case K14) et on passe à l'état S7 (case K16), le changement de voie est alors effectué. Après cette commutation de voies, on retourne à l'état S0, si la valeur TC testée à la case K18 est égale à "1". Si cette dernière valeur est égale à "0", on teste la valeur SDF (case K20). Si elle est égale à "1" on incrémente le compteur 306, case K21, et on revient à l'état S7. Si cette valeur SDF est "0", on teste la valeur TCN (case K22). Une valeur TCN égale à "0" provoque une incrémentation du compteur 308, case K24, et l'on retourne à l'état S7. Si la valeur TCN testée à la case K22 est égale à "1", on active le signal HOFI (case K27) avant de retourner à l'état S0. Ce signal HOFI met en évidence qu'une commutation a eu lieu alors que les données n'étaient pas mises en phase et ne coïncidaient pas. Ce signal HOFI peut déclencher l'illumination d'un voyant FLG (figure 6).

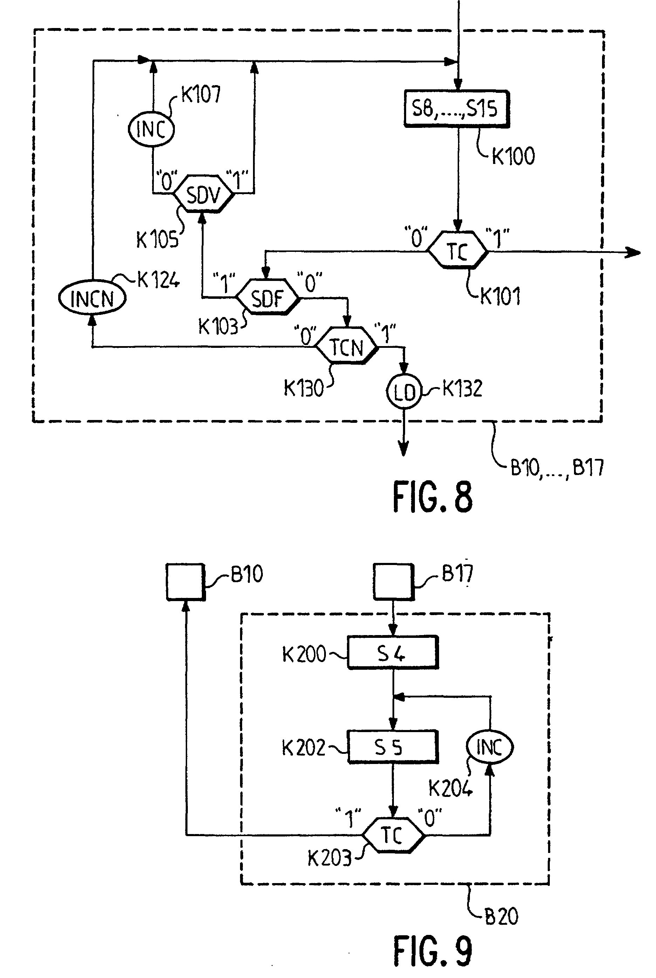

Le test indiqué à la case K3 peut être aussi négatif c'est-à-dire que SDF = "0". Ceci entraîne un test sur la valeur TCN. Si cette valeur est nulle on incrémente à la case K28 le contenu du compteur 308 et on retourne à la case K0. Si elle est égale à "1", les compteurs 306 et 308 sont alors réinitialisés par activation du signal LD (case K32). On passe alors l'état S8 faisant partie d'un bloc de cases B10. Si les tests explicités dans ce bloc B10, à la figure 8, sont corrects on retourne à la case K0. Si ces tests ne sont pas corrects, on passe à successivement aux états S9, ..., S14 des blocs B11, ..., B17. Dès que l'un est correct on retourne à l'état S0 de la case K0. Si les tests du bloc B17 ne sont pas corrects, on passe au bloc B20 qui est associé aux états S5, suivi de l'état S4 qui définit une temporisation nécessaire à la mise en oeuvre du processus de décalage. Les blocs B10 à B17 comportent, comme montré à la figure 8, des cases K100, K101, ... K132 qui sont à rapprocher des cases K0, K1, ..., K32. Le bloc de cases B20 représenté à la figure 9 est formé d'une première case K200 relative à l'état S4, puis on passe à l'état S5, case K202. On effectue à une case K203 un test sur la valeur de TC. Si cette valeur est nulle on incrémente le compteur 306 et on retourne à la case K202. Si cette valeur est "1", on retourne au bloc B10 pour une nouvelle recherche de coïncidences.

## Revendications

1. Système de transmission comportant au moins deux voies de transmission (5,10) pour relier un émetteur (1) et un récepteur (2), système dans lequel il est prévu du côté émetteur :
des moyens pour émettre sur au moins deux voies des données à transmettre,
et du côté récepteur :
- des circuits récepteurs (20,21) pour recevoir les données issues des voies,
- un circuit de remise en coïncidence (30) des données desdites voies, formé :
• d'un circuit détecteur de décalage entre les données des voies pour fournir une information de décalage (EGA2-0,DV3_4),
• d'un circuit de décalage (66,67) pour décaler selon ladite information de décalage (EGA2-0,DV3_4) les données d'au moins une desdites voies,
- un circuit de commutation (35) pour connecter un circuit utilisateur sur une desdites voies,
**caractérisé en ce que** le circuit de décalage (66,67) est formé :
• d'un premier circuit série-parallèle (98,99) pour fournir des mots de N éléments binaires à partir des données reçues,
• d'un circuit de permutation (108,109) pour fournir des mots permutés en permutant les éléments binaires des mots à N éléments binaires en fonction de ladite information de décalage (EGA2-0,DV3_4),
• d'une pluralité de deuxièmes circuits série-parallèle (110,111) pour paralléliser sur M sorties chacune des N sorties du circuit de permutation (108,109), chacun desdits deuxièmes circuits série-parallèle comprenant un circuit de décalage (SP0,...,SP7) à M sorties parallèles et une mémoire tampon (BF0,...,BF7) associée pour mémoriser les données présentes sur les M sorties dudit registre à décalage, les données mémorisées dans lesdites mémoires tampons des deuxièmes circuits série-parallèle étant extraites de celles-ci à des instants déterminés par ladite information de décalage (EGA2-0,DV3_4).

2. Système de transmission selon la revendication 1, **caractérisé en ce que** ladite information de décalage (EGA2-0,DV3_4) est fonction d'une information de non-coïncidence (SDF=0) et **en ce qu'**il est prévu un circuit automate (71) pour produire ladite information de décalage (EGA2-0, DV3_4) en fonction de ladite information de non-coïncidence (SDF=0), circuit automate (71) comportant notamment :
- un compteur de non-coïncidences (308) pour compter le nombre de non-coïncidences fourni par ladite information de non-coïncidence et pour fournir un ordre de décalage audit circuit de décalage.

3. Système de transmission selon la revendication 1 ou 2, **caractérisé en ce que** ladite information de décalage (EGA2-0,DV3_4) est fonction d'une information de coïncidence (SDF=1) et **en ce qu'**il est prévu un circuit automate (71) pour produire ladite information de décalage (EGA2-0,DV3_4) en fonction de ladite information de coïncidence (SDF=1), circuit automate (71) comportant notamment :
- un compteur de coïncidences (306) pour compter le nombre de coïncidences fourni par ladite information de coïncidence (SDF=1) et pour surveiller la coïncidence desdites données.

4. Système de transmission selon l'une des revendications 1 à 3, **caractérisé en ce que** le circuit automate (71) comporte des moyens pour détecter des données de silence pour annihiler le compteur de coïncidences.

5. Récepteur convenant à un système selon l'une des revendications 1 à 4, comportant :
- des circuits récepteurs (20,21) pour recevoir sur au moins deux voies les données en provenance d'un émetteur (1),
- un circuit de remise en coïncidence (30) des données issues desdites au moins deux voies, formé :
• d'un circuit détecteur de décalage entre les données des voies pour fournir une information de décalage (EGA2-0, DV3_4),
• d'un circuit de décalage (66,67) pour décaler selon ladite information de décalage (EGA2-0,DV3_4) les données d'au moins une desdites au moins deux voies,
- un circuit de commutation (35) pour connecter un circuit utilisateur sur une desdites au moins deux voies,
**caractérisé en ce que** le circuit de décalage (66,67) est formé :
• d'un premier circuit série-parallèle (98,99) pour fournir des mots de N éléments binaires à partir des données reçues,
• d'un circuit de permutation (108,109) pour fournir des mots permutés en permutant les éléments binaires des mots à N éléments binaires en fonction de ladite information de décalage (EGA2-0,DV3_4),
• d'une pluralité de deuxièmes circuits série-parallèle (110,111) pour paralléliser sur M sorties chacune des N sorties du circuit de permutation (108,109), chacun desdits deuxièmes circuits série-parallèle comprenant un circuit de décalage (SP0,...,SP7) à M sorties parallèles et une mémoire tampon (BF0,...,BF7) associée pour mémoriser les données présentes sur les M sorties dudit registre à décalage, les données mémorisées dans lesdites mémoires tampons des deuxièmes circuits série-parallèle étant extraites de celles-ci à des instants déterminés par ladite information de décalage (EGA2-0,DV3_4).

## Patentansprüche

1. Übertragungssystem mit mindestens zwei Übertragungskanälen (5, 10) zwischen einem Sender (1) und einem Empfänger (2), wobei das System auf der Senderseite umfasst:
Vorrichtungen zum Senden von zu übertragenden Daten auf mindestens einem Kanal,
und auf der Empfängerseite umfasst:
Empfängerschaltkreise (20, 21) zum Empfangen der Daten auf den Kanälen,
einen Koinzidenzwiederherstellungsschaltkreis (30) für Daten der Kanäle mit:
einem Detektorschaltkreis für die Verschiebung von Daten auf den Kanälen zum Erzeugen einer Verschiebungsinformation (EGA2-0, DV3_4),
einem Verschiebungsschaltkreis (66, 67) zum Verschieben der Daten mindestens eines der Kanäle gemäß der Verschiebungsinformation (EGA2-0, DV3_4),
einen Verbindungsschaltkreis (35) zum Verbinden eines Nutzschaltkreises mit einem der Kanäle,
**dadurch gekennzeichnet, dass**
der Verschiebungsschaltkreis (66, 67) umfasst:
einen ersten Seriell- Parallel- Schaltkreis (98, 99) zum Erzeugen von Worten mit N binären Elementen aus den empfangenen Daten,
einen Permutationsschaltkreis (108, 109) zum Erzeugen von Permutationsworten durch Permutieren der binären Elemente der Worte mit N binären Elementen in Abhängigkeit von der Verschiebungsinformation (EGA2-0, DV3_4),
mehreren zweiten Seriell- Parallel- Schaltkreisen (110, 111) zum parallelen Ausgeben jedes der N Ausgänge des Permutationsschaltkreises (108, 109) auf M Ausgänge, wobei jeder der zweiten Seriell- Parallel- Schaltkreise einen Verschiebungsschaltkreis (SP0, ..., SP7) mit M parallelen Ausgängen und einen dazugehörigen Zwischenspeicher (BF0, ..., BF7) zum Abspeichern der Daten an den M Ausgängen des Schieberegisters umfasst, wobei die gespeicherten Daten in den Zwischenspeichern der zweiten Seriell- Parallel- Schaltkreise aus diesen zu den Zeitpunkten ausgelesen werden, die durch die Verschiebungsinformation (EGA2-0, DV3_4) bestimmt werden.

2. Übertragungssystem nach Anspruch 1,
**dadurch gekennzeichnet, dass**
die Verschiebungsinformation (EGA2-0, DV3_4) eine Funktion einer Nichtkoinzidenz- Information (SDF = 0) ist und ein Automatikschaltkreis (71) vorgesehen ist zum Erzeugen der Verschiebungsinformation (EGA2-0, DV3_4) in Abhängigkeit von den Nichtkoinzidenzinformation (SDF = 0), wobei der Automatikschaltkreis (71) insbesondere umfasst:
einen Nichtkoinzidenzzähler (308) zum Zählen der Zahl der Nichtkoinzidenzen, die durch die Information mitgeteilt werden, und zum Erzeugen einer Verschiebungsreihenfolge für den Verschiebungsschaltkreis.

3. Übertragungssystem nach Anspruch 1 oder 2,
**dadurch gekennzeichnet, dass**
die Verschiebungsinformation (EGA2-0, DV3_4) eine Funktion einer Koinzidenzinformation (SDF = 1) ist und ein Automatikschaltkreis (71) vorgesehen ist zum Erzeugen der Verschiebungsinformation (EGA2-0, DV3_4) in Abhängigkeit von der Koinzidenzinformation (SDF = 1), wobei der Automatikschaltkreis (71) insbesondere umfasst:
einen Koinzidenzzähler (306) zum Zählen der Anzahl der Koinzidenzen, die durch die Koinzidenzinformation (SDF = 1) mitgeteilt werden, und zum Überwachen der Koinzidenz der Daten.

4. Übertragungssystem nach einem der Ansprüche 1 bis 3,
**dadurch gekennzeichnet, dass**
der Automatikschaltkreis (71) Vorrichtungen zum Erfassen von inhaltsleeren Daten umfasst, um den Koinzidenzzähler zu annihilieren.

5. Empfänger mit einem System nach einem der Ansprüche 1 bis 4 mit:
Empfängerschaltkreisen (20, 21) zum Empfangen der Daten von einem Sender (1) auf mindestens zwei Kanälen,
einen Koinzidenzwiederherstellungsschaltkreis (30) für Daten auf den mindestens zwei Kanälen mit:
einem Detektorschaltkreis für die Verschiebung von Daten auf den Kanälen zum Erzeugen einer Verschiebungsinformation (EGA2-0, DV3_4),
einem Verschiebungsschaltkreis (66, 67) zum Verschieben der Daten mindestens eines der mindestens zwei Kanäle gemäß der Verschiebungsinformation (EGA2-0, DV3_4),
einen Verbindungsschaltkreis (35) zum Verbinden eines Nutzschaltkreises mit einem der mindestens zwei Kanäle,
**dadurch gekennzeichnet, dass**
der Verschiebungsschaltkreis (66, 67) umfasst:
einen ersten Seriell- Parallel- Schaltkreis (98, 99) zum Erzeugen von Worten mit N binären Elementen aus den empfangenen Daten,
einen Permutationsschaltkreis (108, 109) zum Erzeugen von Permutationsworten durch Permutieren der binären Elemente der Worte mit N binären Elementen in Abhängigkeit von der Verschiebungsinformation (EGA2-0, DV3_4),
mehreren zweiten Seriell- Parallel- Schaltkreisen (110, 111) zum parallelen Ausgeben jedes der N Ausgänge des Permutationsschaltkreises (108, 109) auf M Ausgänge, wobei jeder der zweiten Seriell- Parallel- Schaltkreise einen Verschiebungsschaltkreis (SP0, ..., SP7) mit M parallelen Ausgängen und einen dazugehörigen Zwischenspeicher (BF0, ..., BF7) zum Abspeichern der Daten an den M Ausgängen des Schieberegisters umfasst, wobei die gespeicherten Daten in den Zwischenspeichern der zweiten Seriell- Parallel- Schaltkreise aus diesen zu den Zeitpunkten ausgelesen werden, die durch die Verschiebungsinformation (EGA2-0, DV3_4) bestimmt werden.

## Claims

1. Transmission system including at least two transmission channels (5, 10) for linking a sender (1) and a receiver (2), a system in which there are provided, at the sending end:
means for sending the data to be transmitted, on at least two channels,
and, at the receiving end:
- receiver circuits (20, 21) for receiving the data coming from the channels,
- a circuit (30) for putting the data from the said channels back into coincidence, formed:
• by a detector of the shift between -the data from the channels, in order to supply shift information (EGA2-0, DV3_4),
• by a shift circuit (66, 67) for shifting the data of at least one of the said channels, depending on the said shift information (EGA2-0, DV3_4),
- a changeover-switching circuit (35) for connecting a user circuit onto one of the said channels, **characterised in that** the shift circuit (66, 67) is formed:
• by a first series/parallel circuit (98, 99) for supplying words of N binary elements from the received data,
• by a permutation circuit (108, 109) for supplying permutated words by permutating the binary elements of the words with N binary elements on the basis of the said shift information (EGA2-0, DV3_4), and
• by a number of second series/parallel circuits (110, 111) for paralleling onto M outputs each of the N outputs of the permutation circuit (108, 109), each of the said second series/parallel circuits comprising a shift circuit (SP0, ..., SP7) with M parallel outputs and an associated buffer memory (BF0, ..., BF7) for storing the data present on the M outputs of the said shift register, the data stored in the said buffer memories of the second series/parallel circuits being extracted from the latter at instants determined by the said shift information (EGA2-0, DV3_4).

2. Transmission system according to Claim 1, **characterised in that** the said shift information (EGA2-0, DV3_4) is a function of non-coincidence information (SDF=0), and **in that** an automatic circuit (71) is provided in order to produce the said shift information (EGA2-0, DV3_4) as a function of the said non-coincidence information (SDF=0), the automatic circuit (71) especially including:
- a counter of non-coincidences (308) for counting the number of non-coincidences which is supplied by the said non-coincidence information and for supplying a shift command to the said shift circuit.

3. Transmission system according to Claim 1 or 2, **characterised in that** the said shift information (EGA2-0, DV3_4) is a function of coincidence information (SDF=1) and **in that** an automatic circuit (71) is provided in order to produce the said shift information (EGA2-0, DV3_4) as a function of the said coincidence information (SDF=1), the automatic circuit (71) especially including:
- a counter of coincidences (306) for counting the number of coincidences which is supplied by the said coincidence information (SDF=1) and for monitoring the coincidence of the said data.

4. Transmission system according to one of Claims 1 to 3, **characterised in that** the automatic circuit (71) includes means for detecting silence data in order to cancel out the coincidences counter.

5. Receiver suitable for a system according to one of Claims 1 to 4, including:
- receiver circuits (20, 21) for receiving, on at least two channels, the data originating from a sender (1),
- at circuit (30) for putting the data coming from the said at least two channels back into coincidence, which is formed:
• by a circuit detecting the shift between the data from the channels in order to supply shift information (EGA2-0, DV3_4),
• by a shift circuit (66, 67) for shifting the data from at least one of the said at least two channels, according to the said shift information (EGA2-0, DV3_4),
- a changeover-switching circuit (35) for connecting the user circuit to at least one of the said at least two channels, **characterised in that** the shift circuit (66, 67) is formed:
• by a first series/parallel circuit (98, 99) for supplying words of N binary elements from the received data,
• by a permutations circuit (108, 109) for supplying permutated words by permutating the binary elements of the words with N binary elements on the basis of the said shift information (EGA2-0, DV3_4),
• by a number of second series/parallel circuits (110, 111) for paralleling onto M outputs each of the N outputs of the permutation circuit (108, 109), each of the said second series/parallel circuits comprising a shift circuit (SP0, ..., SP7) with M parallel outputs and an associated buffer memory (BF0, ..., BF7) for storing the data present on the M outputs of the said shift register, the data stored in the said buffer memories of the second series/parallel circuits being extracted from the latter at instants determined by the said shift information (EGA2-0, DV3_4).
